# EUROPEAN PATENT APPLICATION

(11) **EP 1 574 746 A2**
(43) Date of publication of application: **14.09.2005**
(21) Application number: 05004779.4
(22) Date of filing: 04.03.2005
(51) Int. Cl.: F16G 13/06

(54) **Bicycle drive chain**

(30) Priority: 10.03.2004 DE 102004011572
(71) Applicant: SRAM Deutschland GmbH, 97404 Schweinfurt (DE)
(72) Inventor: Reiter, Markus, Dipl.-Ing., 97422 Schweinfurt (DE); Nunes dos Santos, Pedro Miguel, 2790-226 Carnaxide (PT); Pires, Joao, Monte Formoso 30000-446 Coimbra (PT)

(57) **Abstract**

A bicycle drive chain for transferring drive force to at least one chain wheel. The chain includes a plurality of inner and outer chain links connected by pins. Chain rollers surround the pins. The inner and outer link plates have the same outer contour but have different profiles. The outer link plates (1) have a protruding region (2) extending from a concave section (6) and the inner link plate (13) includes deflection chamfers (14) located on an outer surface (31). The outer link plate (1) further includes chamfers (8,34) diagonally opposed from each other located at first and second convex sections (7,26) on an outer surface (33). The inner link plate has chamfers located on an inner surface that taper off near ends of the inner link plate.

## Description

### Background of the Invention

The present invention relates to bicycle drive chains and more particular to a bicycle drive chain including outer link plates having a protruding region and inner link plates, on an outer surface, having a chamfered edge.

Bicycle drive chains for bicycles having a derailleur include inner and outer chain links pivotally connected to each other. These inner and outer chain links include spaces between the chain links for receiving teeth of chainwheels. The configuration of the chain links is optimized to provide a shifting operation that is quick and reliable. The shifting operations of the chain from a smaller chainwheel to a larger chainwheel and from a larger chainwheel to a smaller chainwheel are fundamentally different. During the shifting operation from the smaller to the larger chainwheel, the first tooth of the larger chainwheel engages only between an outer link plate pair. In contrast, during the shifting operation from the larger to the smaller chainwheel only the inner link plate pair arrives over a tooth on the larger chain wheel in order to shift. The jumping of the chain onto the larger chainwheel is assisted by having wide or funnel-shaped spaces between the outer link plate and pointed teeth. Whereas the skipping of a tooth during a shifting operation to a smaller chainwheel is assisted by external chamfers on the inner link plate.

The patent DE 26 58 651 C2 discloses a bicycle drive chain that includes an outer link plate having an expanded portion for contacting flanks of the teeth of the chainwheel. This expanded portion of the outer link plate projecting beyond the link pins is intended to prevent contact between the protruding rivet heads of the pins and the chainwheels. The inner link plates have a flat profile and spacer bushings that support the chain rollers. The pins are inserted through the bushings and are pressed into the bores of the outer link plates. The rivet heads of the pins do not project beyond the expanded portion of the outer link plate.

Utility Model DE 203 14 167 U1 discloses a bicycle drive chain that includes inner and outer link plates having chamfers on an inner surface. The inner link plates have protrusions extending coaxially with bores for receiving the chain rollers. The outer link plates include a central region that has a concave contour and includes chamfers on an inner surface that taper off at center lines of the bores. Edges of convex sections of the outer link plate are chamfered except for a small section at ends of the link plate. The pins are made from a seamless hollow tube that is riveted to the outer link plates. The bores are beveled on the outside in order to increase the strength of the riveted connection.

While the unobstructed width between the protruding outer link plate disclosed in DE 26 58 651 increases the likelihood of a tooth being captured on a next chainwheel during a shifting operation, a chamfer on an edge on the inner surface would additionally improve the funnel function of the outer link plate and prevent undesired riding-up onto a tooth tip. A disadvantage of the chain disclosed in DE 203 14 167 is that the inner link plate has a wide chamfer in the concave region on an inner edge but not on an outer edge, which may result in rapid deflection at a tangent tooth and prevent riding-up on a tooth tip. Further, the outer link plate, on an outer surface, has chamfers at the convex sections, creating a deflection that is desirable in the pulling direction at a front end of link plate end but prevents reliable shifting at a rear end of the link plate. Therefore, there is a need to provide a bicycle drive chain that optimizes shifting operations by improving the penetration of a tooth between the outer link plate and the deflection of the inner link plate at a tooth.

### Summary of the Invention

The present invention provides a bicycle drive chain for transferring a drive force to at least one chainwheel that includes a plurality of outer link plates and a plurality of inner link plates. The inner and outer link plates have first and second convex sections and a concave section. A plurality of pins connected the outer link plates and the inner link plates. A plurality of chain rollers surrounds the pins. The first and second convex sections have bores for receiving the pins. The inner and outer link plates have different profiles wherein the outer link plate has a protruding region and the inner link plate, on an outer surface, has chamfered edges on the concave section.

In one embodiment of the present invention, the outer link plates, on an inner surface, have chamfered edges on the protruding region. The pin bores may have rivet head depressions on an outer surface of the outer link plate. The inner link plates may also have, on the inner surface, centering chamfers on the convex sections and the concave section. The centering chamfers on the convex sections taper off near ends of the inner link plate.

The outer link plates are more suitable to perform the shifting operation because they have a greater unobstructed space for engaging a tooth on a next chainwheel. Accordingly, the shifting operation may be improved by optimizing the link plate configuration and chamfer arrangement. Thus the present invention provides an outer link plate having a protruding region and chamfers on an inner surface and an inner link plate having chamfers on an outer surface. Upon shifting to the larger chain wheel, this configuration improves the operation of capturing the corresponding tooth because of the wide and funnel-shaped space between the outer link plate pair; and the deflection of the inner link plate at the tooth tip because of the deflection chamfer on the outer surface of the inner link plate.

Further, this configuration of a protruding region on the outer link plate and the deflection chamfer on the inner link plate also has a positive effect on a shifting operation from a larger chainwheel to a smaller chainwheel. The large unobstructed space between the protruding outer link plates allows a relatively large lateral angular movement of the chain at the last tooth of the larger chain wheel, so that the following inner link plate easily arrives over the next tooth; this is additionally assisted by the deflection chamfer on the outer surface of the inner link plate.

The inner and outer link plates have approximately the same contour whereas their profiles are different. The inner link plate is flat on the outer surface and has two projections, on the inner surface, extending coaxially with the bores for receiving the chain rollers. The defection chamfer on the outer surface of the inner link plate tapers off near the radius of the chain roller. The centering chamfers on the edges of the inner link plate extend near the ends of the link plate, leaving an unchamfered region of about 3mm wide. Since the concave section of the inner link plate is chamfered on both sides, a knife-edge is created that allows rapid sliding of the chain along the tooth flank while counteracting undesired riding-up of the inner link plate onto the tooth tip. The centering chamfer on the inner surface of the inner link plate assists the centering of the chain on the chain wheel.

The outer link plate has a protruding region between the chain rollers that extends outward until the rivet heads of the pins. The protruding region extends in a straight line in the longitudinal direction forming a flat surface. The edge of the protruding region is chamfered on an inner surface of the outer link plate. This chamfer tapers off near the region of the chain roller. The protruding region and the chamfers on the outer link plate maximize the unobstructed space between the link plates. Further, this optimizes the shifting operation, in particular the operation in which the chain runs onto the first tooth of the next chainwheel. Further, the protruding region makes it possible for the cutouts on tooth flanks of the chainwheels, for example on the side of the tooth facing away from the smaller chainwheel, to be made smaller or to be entirely omitted, resulting in a more stable contour for the corresponding tooth.

Another embodiment of the present invention, the outer link plate, on the outer surface, includes chamfers on the convex sections. These chamfers do not extend over the entire convex sections since depending on the shifting direction, different situations or requirements occur in terms of the configuration of the convex link plate edges.

During the shifting operation to a larger chainwheel, the outer link plate end that is located at the front in the tension direction is intended to slide past the tooth flank of the first tooth on the large chainwheel, whereas the rear end of the outer link plate needs to brace against the tooth root of the second tooth so that the chain or the next inner link plate is lifted to the level of the chainwheel and the next outer link plate arrives over the corresponding tooth of the larger chainwheel. To improve this operation, the outer link plate is chamfered at the front end facing toward the chainwheel so that it may slide easily along the flank of the first tooth; and the rear end facing toward the chainwheel is not chamfered but rather has a sharp edge so that it may brace against the tooth root of the corresponding tooth in order to raise the level.

Further, the chamfer at the front end of the outer link plate, facing toward the larger chainwheel, has a positive effect during a shifting operation to the smaller chainwheel. The end of the outer link plate toward the front in the tension direction should not be caught at the tooth root of the corresponding tooth on the larger chainwheel after climbing over the tooth. This is prevented by a chamfer at the front end of the outer link plate facing toward the larger chainwheel.

To ensure that the chamfer on the outer surface of the convex section of the outer link plate is effective, it is arranged at a bottom left on the convex section. Upon installation of a chain having only one chamfer on the convex link plate edge, care must be taken that this chamfer always faces toward the tooth root on the side of the chain oriented toward the larger chain wheel. Because it is not usual to take into account the tension direction of the chain when installing it, however, it is advantageous to provide the outer link plate with two diagonally opposed chamfers on the outer surface. The chamfers are arranged, when viewed from the outer surface, at the bottom left and top right of the convex sections of the outer link plates. This simplifies the chain installation, since these outer link plates no longer need to be oriented.

In another embodiment of the present invention, the bores of the outer link plates may have depressions for countersinking the rivet heads of the pins that increase the strength of the riveted connection.

These and other features and advantages of the present invention will be more fully understood from the following description of one embodiment of the invention, taken together with the accompanying drawings.

### Brief Description of the Drawings

In the drawings:

FIG. 1 is a front view of an outer surface of an outer link plate in accordance with one embodiment of the present invention;

FIG. 2 is a front view of an inner surface of the outer link plate of FIG. 1;

FIG. 3 is a front view of an outer surface of an inner link plate in accordance with one embodiment of the present invention;

FIG. 4 is a front view of an inner surface of the inner link plate of FIG. 2;

FIG. 5 is a perspective view of a bicycle drive chain in accordance with one embodiment of the present invention; and

FIG. 6 is a front view the bicycle drive chain of FIG. 5 and a chainwheel during a shifting operation.

### Detailed Description

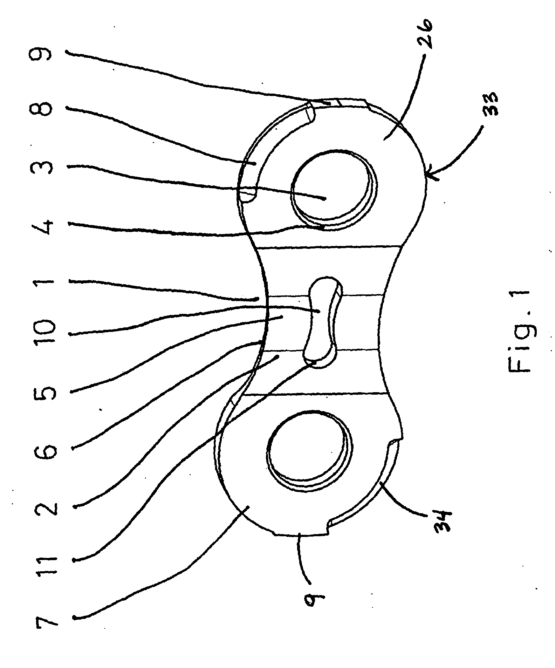

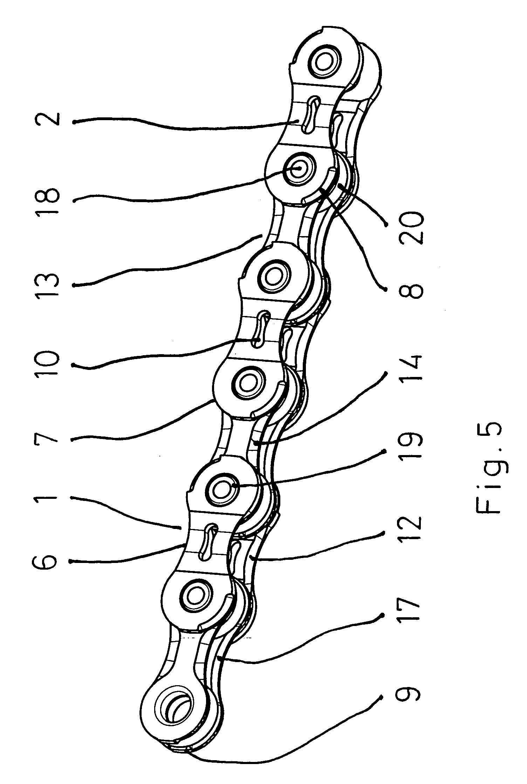

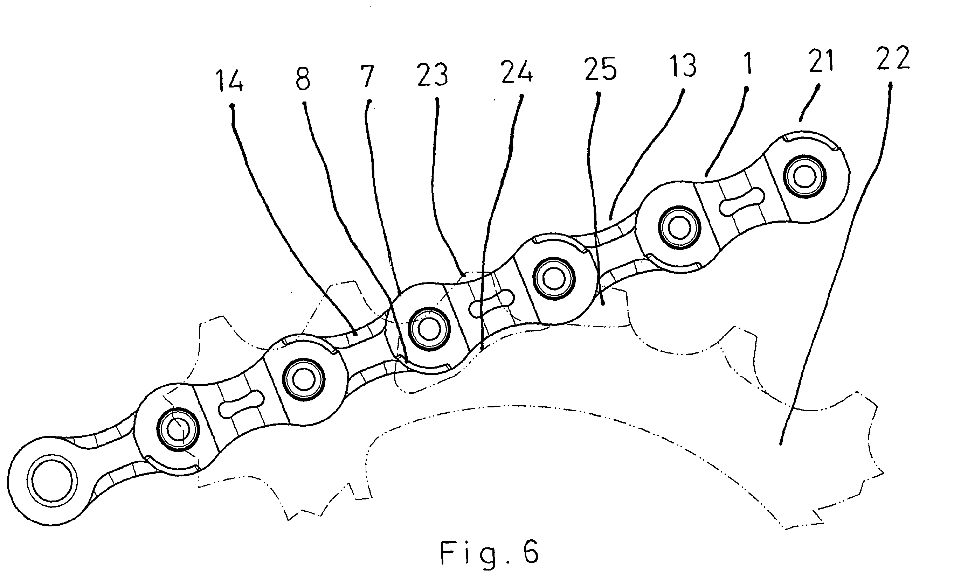

FIGS. 1-6 illustrate a bicycle drive chain 21 in accordance with one embodiment of the present invention. Looking to FIGS. 5 and 6, the bicycle drive chain 21 includes a plurality of outer link plates 1 and a plurality of inner link plates 13. Pins 18 connect the outer and inner link plates 1, 13 to each other. Chain rollers 20 surround the pins 18.

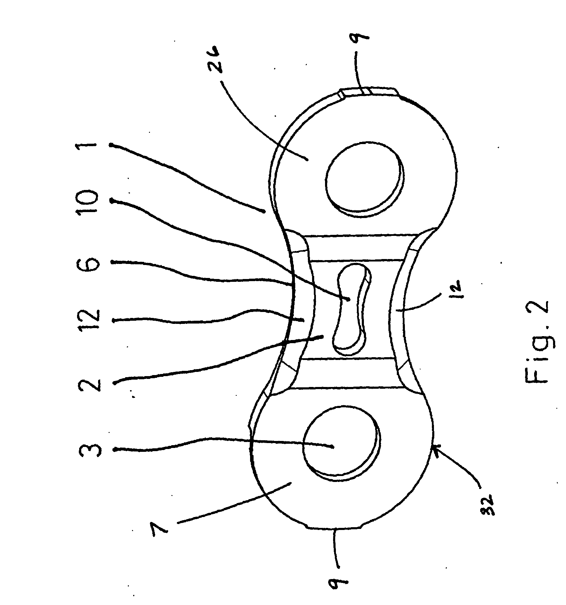

Looking to FIG. 1, the outer link plate 1 includes first and second convex sections 7, 26 and a concave section 6 extending between the first and second convex sections 7, 26. The concave section 6 has a protruding region 2 located on outer surface 33 of the outer link plate 1. The first and second convex sections 7, 26 have openings 3 for receiving the pins 18. The openings 3 have rivet head depressions 4 for receiving rivet heads 19 of the pins 18. An outer surface 5 of the protruding region 2 extends outward as far as the rivet heads 19 or projects slightly beyond them, to prevent the rivet heads 19 from scraping on the chainwheel 22. The convex sections 7, 26 include chamfers 8, 34 that are diagonally opposed from each other, i.e. at the top right and bottom left of the outer link plate 1. The chamfers 8, 34 extend over an angular region of approximately 90 and tapers off before an end 9 of the link plate 1. To reduce weight, the concave section 6 includes an opening 10 having rounded ends 11. Looking to FIG. 2, an inner surface 32 of the outer link plate 1 includes the bores 3 and the opening 10. The concave section 6 includes chamfers 12 that longitudinally extend along the protruding region 2 and then taper off near the chain rollers 20.

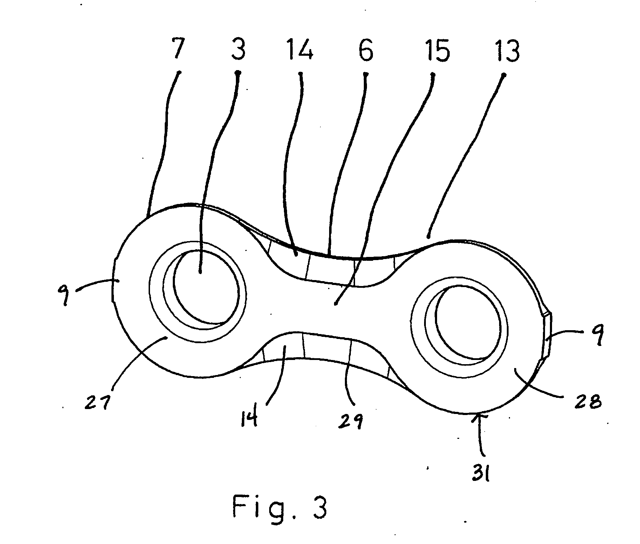

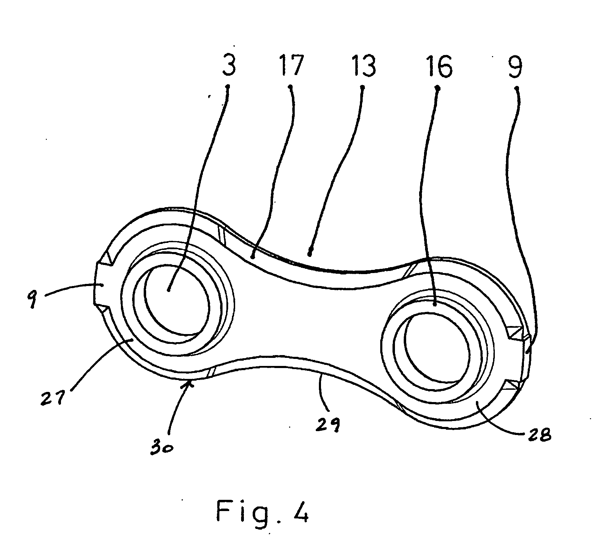

Looking to FIG. 3, the inner link plate 13 includes first and second convex sections 27, 28 and a concave section 29. An outer surface 31 of the inner link plate 13 includes two bores 3 for receiving the pins 18. The concave section 29 includes deflection chamfers 14 that longitudinally extend and taper off at the chain rollers 20. The first and second convex sections 27, 28, on the outer surface 31, do not have chamfers. The flat link plate surface 15 has a contour of a bone, with a straight profile in the concave section 29. Looking to FIG. 4, the two bores 3 extend through the inner link plate 13 to an inner surface 30 of the inner link plate 13. Projections extend from the bores 3 to receive the chain rollers 20. Centering chamfers 17 extend through the first and second convex sections 27, 28 and concave section 29 and then taper off at the ends 9 of the link plate 13, such that only a short unchamfered section or end 9 of the link plate remains.

FIG. 5 illustrates a section of the bicycle drive chain 21 including the outer surface 33 of the outer link plate 1 with the protruding section 2 and the outer surface 31 of the inner link plate 13 with chamfers 14. The pins 18 that may be hollow rivets connect the chain link plates 1, 13. The rivet heads 19 of the pins 18 do not project beyond the protruding region 2 of the outer link plate 1. The protruding region 2 and the chamfers 12 create a maximum link plate spacing and act like a funnel. This considerably improves the shifting operation as well as capture of the corresponding tooth on the chainwheel being shifted to. During the shifting operation, the chamfers 8, 34 located on the outer surface 34 of the outer link plates 1 prevent the outer link plate 1 from being caught at a tooth root of the chainwheel after the last tooth is jumped over. The deflection chamfers 14 on the outer surface 31 of the inner link plate 13 extend near the radius of the chain rollers 20. During the shifting operation to the smaller chainwheel, this deflection chamfer 14 prevents the inner link plate 13 from riding up on the tooth tip, causing the inner link plate 13 to slide smoothly along the tooth flank. To improve chain running, the inner surface 30 of the inner link plate 13 includes the centering chamfer 17 that tapers off near the link plate end 9.

FIG. 6 illustrates a portion of the bicycle drive chain 21 during a shifting operation from a smaller chainwheel to the larger chainwheel 22. During such an operation, the outer link plate 1 slides along a flank of a recessed tooth 23 toward the run-on ramp 24. The chamfer 8 prevents the outer link plate from hanging up on a tooth that does not have a recess. The unchamfered lower right edge of the outer link plate 1 braces against a tooth root of a following tooth 25 and brings the chain 21 to the level of the larger chainwheel 22. The deflection chamfer 14 deflects the inner link plate 13 away from the following tooth 25, but the subsequent outer link plate 1 then arrives over the next tooth and thus successfully completing the shifting operation.

While this invention has been described in reference to a preferred embodiment, it should be understood that numerous changes could be made within the spirit and scope of the inventive concepts described. Accordingly, it is intended that the invention not be limited to the disclosed embodiment, but that it have the full scope permitted by the language of the following claims.

### List of Reference Numerals

- (1): Outer link plate
- (2): Protruding region
- (3): Bore
- (4): Rivet head depression
- (5): Outer edge
- (6): Concave section
- (7): First convex section of outer link plate
- (8): First chamfer
- (9): End of link plate
- (10): Opening
- (11): Rounded end of opening
- (12): Chamfer
- (13): Inner link plate
- (14): Deflection bevel
- (15): Link plate surface
- (16): Projection
- (17): Centering chamfer
- (18): Pin
- (19): Rivet head
- (20): Chain roller
- (21): Chain
- (22): Chainwheel
- (23): Cut-out tooth
- (24): Run-on ramp
- (25): Following tooth
- (26): Second convex section of the outer link plate
- (27): First convex section of inner link plate
- (28): Second convex section of inner link plate
- (29): Concave section of inner link plate
- (30): Inner surface of inner link plate
- (31): Outer surface of inner link plate
- (32): Inner surface of outer link plate
- (33): Outer surface of outer link plate
- (34): Second chamfer

## Claims

1. A bicycle drive chain (21) for transferring a drive force to at least one chainwheel (22), the bicycle chain (21) comprising: a plurality of outer link plates (1) having first and second convex sections (7,26) and a concave section (6) extending between the first and second convex sections (7,26); a plurality of inner link plates (13) having first and second convex sections (27, 28) and a concave section (29) extending between the first and second convex sections (27, 28); a plurality of pins (18) connecting the outer link plates (1) and the inner link plates (13); and a plurality of chain rollers (20) surrounding the pins (18), the outer and inner link plates (1, 13) having different profiles, wherein the outer link plate (1) has a protruding region (2) and the inner link plate (13) has a chamfer (14) on an outer surface (31).

2. The bicycle drive chain (21) of claim 1 wherein the inner link plate (13) has two bores (3) for receiving the pins (18) and two projections (16) coaxially extending from the bores (3) for receiving the chain roller (20) and located on an inner surface (30) of the inner link plate (13), the inner link plate (13) including a deflection chamfer (14) extending along the concave section (29) tapering off near the chain rollers (20).

3. The bicycle drive chain (21) of claim 2 wherein the inner link plate (13) includes centering chamfers (17) located on the inner surface (30) of the inner link plate (13), the centering chamfers (17) tapering off near ends (9) of the inner link plate (13).

4. The bicycle drive chain (21) of claim 1 wherein the protruding region (2) is on the concave section (6) of the outer link plate (1), the protruding region (2) of an outer surface (33) of the outer link plate (13) having an approximately straight profile, the protruding region (2) of an inner surface (32) of the outer link plate (13) having chamfers (12).

5. The bicycle drive chain (21) of claim 4 wherein the chamfers (12) on the inner surface (32) of the outer link plate (13) are larger at the concave section (6) and taper off near the chain rollers (20).

6. The bicycle drive chain (21) of claim 4 wherein the protruding region (2) of the outer link plate (1) extends beyond the pin (18).

7. The bicycle drive chain (21) of claim 4 wherein the protruding region (2) of the outer link plate (1) abuts against a rivet head (19) of the pin (18).

8. The bicycle drive chain (21) of claim 4 wherein at least a portion of the first and second convex sections (7, 26) of the outer link plate (1) is rounded off.

9. The bicycle drive chain (21) of claim 4 wherein the first and second convex sections (7, 26) of the outer link plate (1) have first and second chamfers (8, 34), respectively, on the outer surface (33) of the outer link plate (1).

10. The bicycle drive chain (21) of claim 9 wherein the first and second chamfers (8, 34) are diagonally opposed from each other.

11. The bicycle drive chain (21) of claim 2 wherein the outer link plate (1) includes rivet head depression (4) for countersinking rivet heads (19) of the pins (18), the rivet head depressions (4) are arranged coaxially with the bores (3) on an outer surface (33) of the outer link plates (1).

12. The bicycle drive chain (21) of claim 1 wherein the protruding region (2) of the outer link plate (1) has openings (10) between the chain rollers (20).

13. The bicycle drive chain (21) of claim 12 wherein the openings (10) are elongated and have rounded ends (11).

14. The bicycle drive chain (21) of claim 1 wherein the concave sections (6, 29) of the outer and inner link plates (1, 13) have openings (10) between the chain rollers (20).

15. The bicycle drive chain (21) of claim 14 wherein the openings (10) are elongated and have rounded ends (11).
